(19) 

Europäisches
Patentamt
European
Patent Office
Office européen
des brevets

(11) **EP 2 728 937 B1**

(12) **EUROPEAN PATENT SPECIFICATION**

(45) Date of publication and mention
of the grant of the patent:
**11.09.2019 Bulletin 2019/37**

(21) Application number: **12817906.6**

(22) Date of filing: **25.07.2012**

(51) Int Cl.:
***H04W 36/32*** *(2009.01)*

(86) International application number:
**PCT/CN2012/079145**

(87) International publication number:
**WO 2013/013618 (31.01.2013 Gazette 2013/05)**

(54) **CELL CHANGING METHOD AND DEVICE**

ZELLENWECHSELVERFAHREN UND -VORRICHTUNG

PROCÉDÉ ET DISPOSITIF DE CHANGEMENT DE CELLULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.07.2011 CN 201110208551**

(43) Date of publication of application:
**07.05.2014 Bulletin 2014/19**

(73) Proprietor: **Huawei Technologies Co., Ltd.
Longgang District
Shenzhen, Guangdong 518129 (CN)**

(72) Inventors:
• **WANG, Shukun
Shenzhen
Guangdong 518129 (CN)**
• **LEGG, Peter
Shenzhen
Guangdong 518129 (CN)**

• **OLOFSSON, Henrik
Shenzhen
Guangdong 518129 (CN)**
• **WANG, Xuelong
Shenzhen
Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
**WO-A2-2011/013967       WO-A2-2011/013967
CN-A- 1 852 562         CN-A- 1 859 726
US-A1- 2008 176 563     US-A1- 2010 113 036
US-B1- 6 285 884**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Embodiments of the present invention relate to the field of communications technologies, and in particular, to a cell change method and device.

**BACKGROUND**

A wireless communication system can provide wireless services such as voice and data. Generally, a wireless communication system is a multi-access wireless system, such as FDMA (Frequency Division Multiple Access, Frequency Division Multiple Access), TDMA (Time Division Multiple Access, Time Division Multiple Access), CDMA (Code Division Multiple Access, Code Division Multiple Access), OFDMA (Orthogonal Frequency Division Multiple Access, Orthogonal Frequency Division Multiple Access), and SC-FDMA (Single Carrier-Frequency Division Multiple Access, Single Carrier-Frequency Division Multiple Access). In a wireless communication system, a base station transmits data and/or control information to a user equipment (UE, User Equipment) on a downlink, and receives data and/or control information sent by the UE on an uplink. Similarly, the UE transmits data and/or control information to the base station on an uplink, and receives data and/or control information transmitted by the base station on a downlink.

In a wireless network, the UE selects to camp on a cell of the highest signal quality, and obtains network services. While the UE is moving, the UE selects and changes a serving cell according to signal quality comparison between a current serving cell and a neighboring cell. While the UE is in an idle state, the cell change is referred to as cell reselection (cell reselection); while the UE is in a connected state, the cell change is referred to as cell handover (cell handover). For a UE moving at a high speed, the cell change occurs frequently.

The frequent cell change not only increases the system signaling burden and throughput, but also increases UE power consumption and the change failure rate.

WO 2011/013967 A2 relates to a method for adjusting Treselection according the mobility state, it discloses that if signal quality of the neighbor cell is greater than a threshold, a reselection timer starts. If the neighboring cell is a micro cell, the first Treselcetion Tmicro is used, and if the neighboring cell is a macro cell, the second Treselection Tmacro is used, the Treselection is a reselection time. It also discloses that by determining the mobility state, the UE can adjust the Treselection which is one of factors of determining cell reselection according to the mobility of the UE, if the mobility is high, the Treselection is decreased.

US 6285884 B1 discloses that a decision on handing a mobile station over to the base station if a micro cell is made on the basis of a variable representing the relative speed of the mobile station and the signal level and/or quality of the microcell base station.

US 2010/113036 A1 relates to a handover method including when entering a neighboring small cell, checking a movement speed of the MS and determining whether to hand over to the small cell by taking into account the movement speed of the MS.

US 2008/176563 A1 relates to a controller that directs the service registration manager to apply a preset offset to the reselection criterion parameter value.

**SUMMARY**

In one aspect, the present invention provides a cell change method, including: receiving a cell list sent by a base station, wherein the cell list comprises a cell identifier of one or more cells; determining that a target cell of cell change is a micro cell, where the cell change includes cell reselection or cell handover; determining a mobility state or a moving speed of a user equipment; and using a decision parameter to make to make a cell change decision for the target cell according to the mobility state or the moving speed of the user equipment, wherein the decision parameter is scaled based on the mobility state or the moving speed; the determining that a target cell of cell change is a micro cell comprises: if all cells in the cell list are micro cells and a cell identifier of the target cell is comprised in the cell list, determining that the target cell is a micro cell, wherein the cell list further comprises an offset of a cell-specific offset that corresponds to one or more cells, and an offset of a signal quality offset that corresponds to one or more cells; and the making a cell change decision for the target cell according to the mobility state or the moving speed of the user equipment comprises: if the mobility state of the user equipment is a high-mobility state or the moving speed of the user equipment is greater than or equal to a speed threshold, when the user equipment is in a connected state, using an offset of a cell-specific offset corresponding to the target cell at the time of making a cell change decision, and, when the user equipment is in an idle state, using an offset of a signal quality offset corresponding to the target cell at the time of making the cell change decision.

In another aspect, the present invention provides a user equipment, including: a receiving unit, configured to receive a cell list sent by a base station, wherein the cell list comprises a cell identifier of one or more cells; a first determining unit, configured to determine that a target cell of 11 change is a micro cell, where the cell change includes cell reselection or cell handover;

a second determining unit, configured to determine a mobility state or a moving speed of the user equipment; and a deciding unit, configured to use a decision parameter to make a cell change decision for the target cell according to the mobility state or the moving speed of the user equipment wherein the decision parameter is scaled based on the mobility state or the moving speed; the first determining unit is further configured to determine that the target cell is a micro cell in a case where all cells in the cell list are micro cells and the cell identifier of the target cell is comprised in the cell list, wherein the cell list further comprises an offset of a cell-specific offset that corresponds to one or more cells, and an offset of a signal quality offset that corresponds to one or more cells; and the making a cell change decision for the target cell according to the mobility state or the moving speed of the user equipment by the deciding unit comprises if the mobility state of the user equipment is a high-mobility state or the moving speed of the user equipment is greater than or equal to a speed threshold, when the user equipment is in a connected state, using an offset of a cell-specific offset corresponding to the target cell at the time of making a cell change decision, and, when the user equipment is in an idle state, using an offset of a signal quality offset corresponding to the target cell at the time of making the cell change decision.

In a process of making a cell change decision for a micro cell in the embodiments of the present invention, the mobility state or the moving speed of the user equipment is taken into account, to reduce unnecessary cell changes for the micro cell, thereby reducing the system burden and user equipment power consumption caused by frequent cell change.

## BRIEF DESCRIPTION OF DRAWINGS

To illustrate the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a flowchart of a cell change method according to an embodiment of the present invention;
FIG. 2 is a flowchart of a cell change method according to another embodiment of the present invention;
FIG. 3 is a schematic flowchart of a cell change process according to an embodiment of the present invention;
FIG. 4 is a block diagram of a user equipment according to an embodiment of the present invention; and
FIG. 5 is a block diagram of a base station according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions of the present invention are applicable to various communication systems, such as a Global System of Mobile communication (Global System of Mobile communication, GSM) system, a Code Division Multiple Access system, a Wideband Code Division Multiple Access (WCDMA, Wideband Code Division Multiple Access Wireless) system, a General Packet Radio Service (GPRS, General Packet Radio Service) system, and a Long Term Evolution (LTE, Long Term Evolution) system.

A user equipment (UE, User Equipment) is also referred to as a mobile terminal (Mobile Terminal), a mobile user equipment, and the like, and may communicate with one or more core networks through a radio access network (such as RAN, Radio Access Network). A user equipment may be a mobile terminal such as a mobile phone (or referred to as a "cellular" phone), or a computer with a mobile terminal, and for example, may be a mobile device that is portable, pocket-sized, handheld, built in a computer, or mounted in a vehicle, which exchanges voice and/or data with the radio access network.

A base station may be a base station (BTS, Base Transceiver Station) in a GSM or CDMA system, or a base station (NodeB) in a WCDMA system, or an evolved base station (eNB or e-NodeB, evolutional NodeB) in an LTE system, or an access point (AP, Access Point), which is not limited in the present invention.

The following describes the embodiments of the present invention by taking an LTE (Long Term Evolution, Long Term Evolution) or LTE-A (LTE-Advanced, LTE-Advanced) wireless communication system as an example.

To meet or enhance performance requirements of the LTE-A, different types of base stations or base stations based on different standards, such as, base stations or transmitting/receiving nodes that have low transmit power, are deployed in a homogeneous network (homogeneous network), so as to enhance network coverage and performance. Such a network structure is referred to as a heterogeneous network (Heterogeneous network). Examples of the base stations or transmitting/receiving nodes that have low transmit power include: Micro BS (micro base station), Pico BS (pico base station), Home BS (home base station), femto BS (femto base station), Relay BS (relay base station), and RRH (Remote Radio Head, remote radio head). Compared with a cell of a base station that has high transmit power (such as a macro base station, Macro eNodeB, MeNB) (which may be referred to as a "macro cell") in a heterogeneous network, usually a cell of a base station that has low transmit power (briefly referred to as lower power base station, lower power node, LPN) (which may be referred to as a "micro cell") provides smaller coverage.

Because numerous micro cells are phased in and the micro cells have a very small radius, when a high-speed UE traverses a micro cell, the UE may hand over to or reselect another micro cell hardly when it hands over to or reselects one micro cell. For example, the UE camps on a micro cell for less than 1 second. Such a handover is unnecessary.

For a connected UE, with increase of handovers to cells, the network-side signaling load and the system throughput will increase, and the handovers in such a scenario will increase UE handover failures and call drops, which affects user experience drastically. For an idle UE that moves at a high speed, with increase of reselection of micro cells, problems such as UE power consumption arise.

When making a cell change decision for a micro cell, the embodiments of the present invention take the speed of a user equipment into account to reduce unnecessary cell changes.

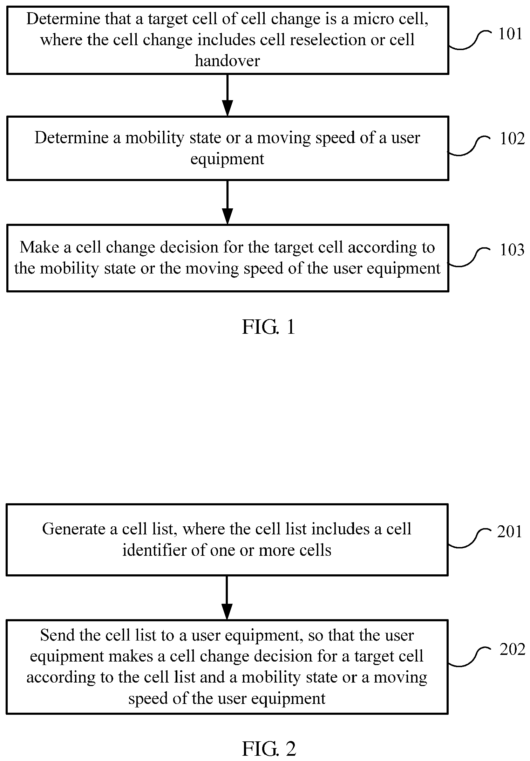

FIG. 1 is a flowchart of a cell change method according to an embodiment of the present invention. The method in FIG. 1 is executed by a user equipment.

101. Determine that a target cell of cell change is a micro cell, where the cell change includes cell reselection or cell handover.

For example, for a connected user equipment, the cell change refers to cell handover; for an idle user equipment, the cell change refers to cell reselection.

Optionally, in an embodiment, the user equipment may receive a cell list sent by a base station and determine, according to the cell list, whether the target cell of cell change is a micro cell. The cell list includes a cell identifier of one or more cells. For example, if all cells in the cell list are micro cells and the cell identifier of the target cell is included in the cell list, it is determined that the target cell is a micro cell.

In the embodiment of the present invention, the user equipment can not only identify a micro cell according to the cell list sent by the base station, but also determine whether the target cell is a micro cell by other means. Such variations shall fall within the scope of the embodiment of the present invention.

102. Determine a mobility state or a moving speed of a user equipment.

The embodiment of the present invention does not limit the execution order of step 101 and step 102. 102 may be executed before or after 101, or be executed concurrently with 101. Such variations shall fall within the scope of the embodiment of the present invention.

Optionally, in an embodiment, in an LTE system, the mobility state of the UE may be determined according to the number of cell changes that occur in a specified time. For example, the mobility state of the UE in the LTE system comes in three levels: a High-mobility state (high-mobility state), a Medium- mobility state (medium-mobility state), and a Normal-mobility state (normal-mobility state). For details, reference may be made to the content in 3GPP TS36.304Va.1.0.

Optionally, in another embodiment, the UE may obtain the moving speed by other means such as GPS (Global Positioning System; global positioning system).

103. Make a cell change decision for the target cell according to the mobility state or the moving speed of the user equipment.

For example, a connected user equipment makes a cell handover decision, or an idle user equipment makes a cell reselection decision.

Optionally, in an embodiment, if the mobility state of the user equipment is a high-mobility state or the moving speed of the user equipment is greater than or equal to a speed threshold, it is determined that the target cell is in a barred state, or that no reporting of an A3 event is triggered, or that the target cell is not put into a cell reselection candidate list.

Optionally, in another embodiment, if the mobility state of the user equipment is a high-mobility state or the moving speed of the user equipment is greater than or equal to a speed threshold, when the user equipment is in a connected state, a cell-specific offset corresponding to the target cell is set to invalid or 0 dB at the time of making a cell change decision, and, when the user equipment is in an idle state, a signal quality offset corresponding to the target cell is set to invalid or 0 dB at the time of making the cell change decision.

Optionally, in another embodiment, if the mobility state of the user equipment is a medium-mobility state or a normal-mobility state or the moving speed of the user equipment is lower than a speed threshold, the cell list is ignorable at the time of making a cell change decision and the cell change decision may be made according to the prior art.

Optionally, in another embodiment, when it is determined that the target cell is a micro cell, a decision parameter that is scaled based on the mobility state or the moving speed is used at the time of making a cell change decision; when it is determined that the target cell is a macro cell, a decision parameter that is scaled based on the mobility state or the moving speed is not used at the time of making a cell change decision.

In a process of making a cell change decision for a micro cell in the embodiment of the present invention, the mobility state or the moving speed of the user equipment is taken into account, to reduce unnecessary cell changes for the micro cell, thereby reducing the system burden and user equipment power consumption caused by frequent cell change.

FIG. 2 is a flowchart of a cell change method according to another embodiment of the present invention. The method in FIG. 2 is executed by a base station.

201. Generate a cell list, where the cell list includes a cell identifier of one or more cells.

Optionally, in an embodiment, one or more cells in the cell list are micro cells, or one or more cells in the cell list are macro cells.

202. Send the cell list to a user equipment, so that the user equipment makes a cell change decision for a target cell according to the cell list and a mobility state or a moving speed of the user equipment, where the cell change includes cell reselection or cell handover.

Optionally, in an embodiment, the base station may send the cell list to the user equipment through dedicated signaling or system broadcast.

In a process of making a cell change decision in the embodiment of the present invention, both the cell list delivered by the base station and the mobility state of the user equipment are taken into account, to reduce unnecessary cell changes, thereby reducing the system burden and user equipment power consumption caused by frequent cell change.

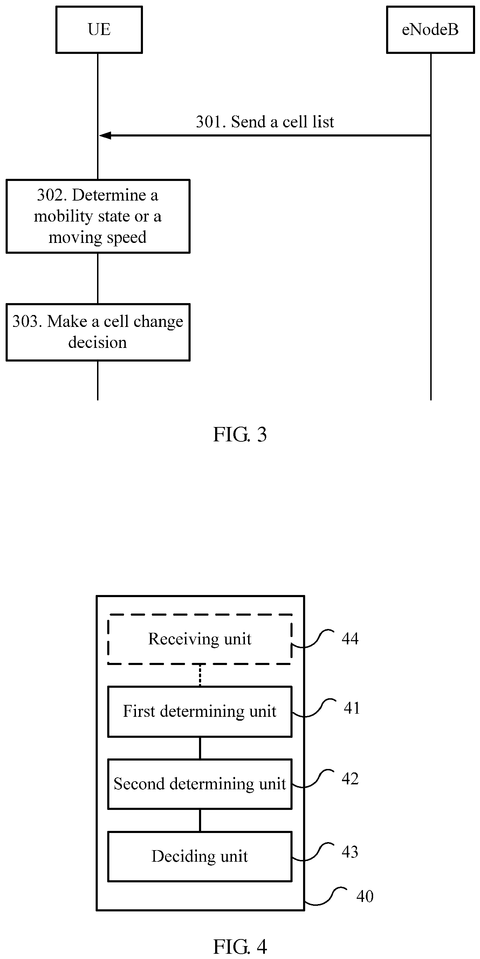

The following expounds the embodiments of the present invention in more detail with reference to specific examples. FIG. 3 is a schematic flowchart of a cell change process according to an embodiment of the present invention. In FIG. 3, UE represents a user equipment, and eNodeB represents a base station of a current serving cell of the UE. However, the present invention is not limited to communication systems represented by such specific terms, and similarly, in other types of communication systems, user equipments and base stations in other forms may be applied. Such variations shall fall within the scope of the embodiment of the present invention.

301. A UE receives a cell list sent by an eNodeB, where the cell list includes a cell identifier of one or more cells.

Optionally, in an embodiment, the cell identifier may be a physical ID of the cell, such as a PCI (Physical Cell Identity, physical cell identifier). However, without being limited to the above, the embodiment of the present invention may also employ cell identifiers in other forms, such as an ECGI (Evolved Cell Global Identifier, evolved cell global identifier).

Optionally, in an embodiment, a cell included in the cell list may be a micro cell covered by an eNodeB or a macro cell adjacent to the eNodeB. In this case, the base station may implicitly or explicitly indicate to the UE whether the cell list includes cell identifiers of micro cells or macro cells.

Optionally, in another embodiment, the eNodeB may broadcast the cell list through cell broadcast, or send the cell list to the connected UE through dedicated signaling.

302. The UE determines its mobility state or moving speed. 302 may be executed after or before 301 or concurrently with 301, which is not limited in the present invention.

303. The UE makes a cell change decision for a target cell according to the mobility state or the moving speed determined in 302 and the cell list received in 301.

Optionally, in an embodiment, in 303 of FIG. 3, depending on whether the cell list includes the cell identifier of the target cell, the UE may determine whether a decision parameter that is scaled based on the mobility state or the moving speed is used at the time of making the cell change decision.

Specifically, in a case where one or more cells in the cell list are micro cells, when the cell list includes the cell identifier of the target cell, the decision parameter that is scaled based on the mobility state or the moving speed is used at the time of making the cell change decision. The decision parameter may be scaled in a manner of scaling the decision parameter based on the speed in the prior art. For details, reference may be made to the content in 3GPP TS36.304Va.1.0. Alternatively, in a case where one or more cells in the cell list are macro cells, when the cell list includes the cell identifier of the target cell, no decision parameter that is scaled based on the mobility state or the moving speed is used at the time of making the cell change decision. For example, in a case where a current serving cell is cell A and a target cell is cell B: if all cells in the cell list received by the UE are micro cells, and, when the cell list includes a cell identifier of cell B, it indicates that the target cell is a micro cell, and therefore, the UE performs scaling of the decision parameter, and then makes a cell change decision according to the scaled decision parameter; if all cells in the cell list received by the UE are macro cells, and, when the cell list includes a cell identifier of cell B, it indicates that the target cell is a macro cell, and therefore, the UE does not perform scaling of the decision parameter.

It can be seen that, at the time of making the cell change decision, if the target cell is a micro cell, the scaling of the decision parameter is performed, and then the cell change decision is made according to the scaled decision parameter. In this way, unnecessary handovers can be reduced.

Optionally, in another embodiment, in 303 of FIG. 3, when the mobility state of the user equipment is a high-mobility state or the moving speed of the user equipment is greater than or equal to a speed threshold, the cell change decision is made for the target cell depending on whether the cell list includes the cell identifier of the target cell. For example, when the cell list includes the cell identifier of the target cell, it is determined that the target cell is in a barred (Barred) state, or that no reporting of an A3 event is triggered (for a connected UE), or that the target cell is not put into a cell reselection candidate list (for an idle UE).

In another aspect, when the mobility state of the user equipment is a medium-mobility state or a normal-mobility state or the moving speed of the user equipment is lower than a speed threshold, the cell list is ignored, that is, the cell list is regarded as invalid, at the time of making a cell change decision.

As regards the speed threshold, the UE may receive, through dedicated signaling or system broadcast, the speed threshold sent by the base station. For example, for a connected UE, the speed threshold is notified to the UE through dedicated RRC signaling; for an idle UE, the speed threshold is notified to the UE through system broadcast.

In this way, when the UE moves at a high speed, the UE will not hand over to or reselect a cell in the cell list, which can reduce unnecessary handovers. Especially, in a heterogeneous network, all micro cells covered by a macro cell are listed in a cell list, which can prevent a high-speed UE from handing over between the macro cell and the micro cell or reselecting a micro cell, and reduce the system signaling burden.

Optionally, in another embodiment, before 301, a step of generating, by an eNodeB, a cell list may further be included. The cell list generated by the eNodeB includes not only a cell identifier of one or more cells, but also an offset of a cell-specific offset corresponding to one or more cells and/or an offset of a signal quality offset corresponding to one or more cells. Hereinafter, for a connected UE, the offset of the cell-specific offset may be marked as OcnOffset; for an idle UE, the offset of the signal quality offset may be marked as Q2offset.

In this case, in 303 of FIG. 3, when the mobility state of the UE is a high-mobility state or the moving speed of the UE is greater than or equal to a speed threshold, if the UE is in a connected state, an offset OcnOffset of a cell-specific offset corresponding to the target cell is used at the time of making a cell change decision, and, if the UE is in an idle state, an offset of a signal quality offset corresponding to the target cell, Q2offset, is used at the time of making the cell change decision. When the mobility state of the UE is a medium-mobility state or a normal-mobility state or the moving speed of the user equipment is lower than a speed threshold, neither the offset of the cell-specific offset corresponding to the target cell nor the offset of the signal quality offset corresponding to the target cell is used at the time of making a cell change decision.

Specifically, for a connected UE, a currently stipulated condition for triggering an A3 event is as follows (for details, reference may be made to the content in 3GPP TS36.304Va.1.0):

$$Mn + Ofn + Ocn - Hys > Mp + Ofp + Ocp + Off \qquad (1)$$

In the above expression, Mn is a measurement result of a neighboring cell (that is, the target cell) regardless of any offset; Ofn is a frequency-specific offset corresponding to the frequency of the target cell; Ocn is a cell-specific offset of the target cell; Hys is a hysteresis parameter (hysteresis parameter) of the event; Mp is a measurement result of a primary cell PCell (that is, current serving cell) regardless of any offset; Ofp is a frequency-specific offset of a primary frequency; Ocp is a cell-specific offset of a primary cell; and Off is an offset parameter of the event. Ocp and Ocn are cell-level parameters. That is, each cell has its own parameters.

In the embodiment of the present invention, when the UE is in a high-mobility state or the moving speed is greater than a speed threshold, the condition for triggering the A3 event takes OcnOffset into account.

$$Mn + Ofn + Ocn - Hys > Mp + Ofp + Ocp + Off + OcnOffset \qquad (2)$$

In addition, alternatively, it may be regarded in this embodiment that Ocn is invalid or 0 dB, that is:

$$Mn + Ofn\text{-}Hys > Mp + Ofp + Ocp + Off \qquad (3)$$

When the mobility state of the UE is normal or medium, or when the moving speed of the UE does not reach the speed threshold, it is regarded that the offset OcnOffset of the cell-specific offset of the target cell is invalid or 0 dB.

The trigger condition may be used in combination with whether the cell list includes the target cell. For example, in a case where the UE is in a high-mobility state or the moving speed is higher than the speed threshold, when the target cell is included in the cell list, a decision may be made according to the above condition (2) or (3); and when the target cell is not included in the cell list, a decision may be made according to the above condition (3) or the above condition (1).

For an idle UE, the UE ranks candidate cells. For example, the candidate cells are ranked according to an existing R criterion, and then the best ranked cell is selected as the target cell of the cell reselection. The existing R criterion is as follows (for details, reference may be made to the content in 3GPP TS36.304Va. 1.0):

$$Rs = Qmeas,s + QHyst$$
$$Rn = Qmeas,n - Qoffset \tag{4}$$

In the equations above, Qmeas,s and Qmeas,n are measurements used in cell reselection, such as an RSRP (Reference Signal Receiving Power, reference signal receiving power) measurement; QHyst is signal hysteresis of the current serving cell; and Qoffset is a signal quality offset of the target cell.

In addition, alternatively, when the UE is in a high-mobility state or the UE speed is greater than a speed threshold, it may be regarded in this embodiment that the Qoffset is invalid or 0 dB.

In the embodiment of the present invention, when the UE is in a high-mobility state or the UE speed is greater than the speed threshold, the R criterion is defined as:

$$Rs = Qmeas,s + QHyst$$
$$Rn = Qmeas,n - Qoffset\text{-}Q2offset \tag{5}$$

When the mobility state of the UE is normal or medium, or when the moving speed of the UE does not reach the speed threshold, it is regarded that the offset of the signal quality offset of the cell, Q2Offset, is invalid or 0 dB.

In this way, when the UE speed is high, the cell change decision (such as A3 event triggering condition or R criterion) is stricter, which can reduce unnecessary cell changes.

Optionally, the above embodiments may be combined to be used. For example, if the cell list does not include the offset of the signal quality offset, when the cell list includes the cell identifier of the target cell, the cell-specific offset Ocn or the signal quality offset Qoffset that correspond to the target cell may be set to invalid or 0 dB at the time of making the cell change decision. Alternatively, in another embodiment, the parameters in the conditions (1) to (5) may be scaled according to the moving speed of the UE in the process of decision. Such variations shall fall within the scope of the embodiment of the present invention.

FIG. 4 is a block diagram of a user equipment according to an embodiment of the present invention. A user equipment 40 in FIG. 4 includes a first determining unit 41, a second determining unit 42, and a deciding unit 43.

The first determining unit 14 determines that a target cell of cell change is a micro cell, where the cell change includes cell reselection or cell handover. The second determining unit 42 determines a mobility state or a moving speed of the user equipment. The deciding unit 43 makes a cell change decision for the target cell according to the mobility state or the moving speed of the user equipment that is determined by the second determining unit 42.

In a process of making a cell change decision for a micro cell in the embodiment of the present invention, the mobility state or the moving speed of the user equipment is taken into account, to reduce unnecessary cell changes for the micro cell, thereby reducing the system burden and user equipment power consumption caused by frequent cell change.

Parts of the user equipment 40 can perform UE-related operations involved in the foregoing methods. To avoid repetition, the detailed description is omitted.

Optionally, in an embodiment, as shown in FIG. 4, the user equipment 40 may further include a receiving unit 44 for receiving a cell list sent by a base station, where the cell list includes a cell identifier of one or more cells. The first determining unit 41 may determine that the target cell is a micro cell in a case where all cells in the cell list are micro cells and the cell identifier of the target cell is included in the cell list.

Optionally, in an embodiment, in a case where the mobility state of the user equipment is a high-mobility state or the moving speed of the user equipment is greater than or equal to a speed threshold, the deciding unit 43 determines that the target cell is in a barred state, or that no reporting of an A3 event is triggered, or that the target cell is not put into a cell reselection candidate list.

Optionally, in another embodiment, in a case where the mobility state of the user equipment is a high-mobility state or the moving speed of the user equipment is greater than or equal to a speed threshold, when the user equipment is in a connected state, the deciding unit 43 sets a cell-specific offset corresponding to the target cell to invalid or 0 dB at the time of making a cell change decision, and, when the user equipment is in an idle state, sets a signal quality offset corresponding to the target cell to invalid or 0 dB at the time of making the cell change decision.

Optionally, in another embodiment, in a case where the mobility state of the user equipment is a medium-mobility state or a normal-mobility state or the moving speed of the user equipment is lower than a speed threshold, the deciding unit 43 ignores the cell list at the time of making the cell change decision.

Optionally, in another embodiment, in a case where one or more cells in the cell list are micro cells, when the cell list includes the cell identifier of the target cell, if the user equipment is in a connected state, the deciding unit 43 sets a cell-specific offset (such as Ocn) corresponding to the target cell to invalid or 0 dB at the time of making a cell change decision, and, if the user equipment is in an idle state, sets a signal quality offset (such as Qoffset) corresponding to the target cell to invalid or 0 dB at the time of making the cell change decision.

Optionally, in another embodiment, the cell list received by the receiving unit 44 further includes an offset of a cell-specific offset that corresponds to one or more cells and/or an offset of a signal quality offset that corresponds to one or more cells. In this case, when the mobility state of the user equipment is a high-mobility state or the moving speed of the user equipment is greater than or equal to a speed threshold, if the user equipment is in a connected state, the deciding unit 43 may use an offset (such as OcnOffset) of a cell-specific offset corresponding to the target cell at the time of making a cell change decision, and, if the user equipment is in an idle state, use an offset (such as Q2offset) of a signal quality offset corresponding to the target cell at the time of making the cell change decision. Alternatively, when the mobility state of the user equipment is a medium-mobility state or a normal-mobility state or the moving speed of the user equipment is lower than a speed threshold, the deciding unit 43 may use neither the offset of the cell-specific offset corresponding to the target cell nor the offset of the signal quality offset corresponding to the target cell at the time of making the cell change decision, for example, set the offset to invalid or 0 dB. For example, the deciding unit 43 may use the formulas (1) to (5) to make the cell change decision. To avoid repetition, no repeated description is given here.

Optionally, in another embodiment, the receiving unit 44 may, when the user equipment is in a connected state, receive the cell list that is sent by a base station through dedicated signaling or system broadcast, or, when the user equipment is in an idle state, receive the cell list that is sent by the base station through system broadcast.

Optionally, in another embodiment, when a speed threshold needs to be used, the receiving unit 44 may further receive, through dedicated signaling or system broadcast, the speed threshold delivered by the base station.

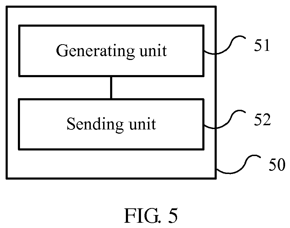

FIG. 5 is a block diagram of a base station according to an embodiment of the present invention. A base station 50 in FIG. 5 includes a generating unit 51 and a sending unit 52.

The generating unit 51 generates a cell list, where the cell list includes a cell identifier of one or more cells. The sending unit 52 sends the cell list generated by the generating unit 51 to a user equipment, so that the user equipment makes a cell change decision for a target cell according to the cell list and a mobility state or a moving speed of the user equipment, where the cell change includes cell reselection or cell handover.

In a process of making a cell change decision in the embodiment of the present invention, both the cell list delivered by the base station and the mobility state of the user equipment are taken into account, to reduce unnecessary cell changes, thereby reducing the system burden and user equipment power consumption caused by frequent cell change.

Parts of the base station 50 can perform base station-related operations involved in the foregoing methods. To avoid repetition, the detailed description is omitted. Optionally, in an embodiment, one or more cells in the cell list generated by the generating unit 51 are micro cells; or, one or more cells in the cell list generated by the generating unit 51 are macro cells.

Optionally, in another embodiment, the cell list generated by the generating unit 51 further includes an offset of a cell-specific offset that corresponds to one or more cells, and/or an offset of a signal quality offset that corresponds to one or more cells.

Optionally, in another embodiment, the sending unit 52 may send the cell list to the user equipment through dedicated signaling or system broadcast.

Optionally, in another embodiment, when a speed threshold needs to be used, the sending unit 52 may further send the speed threshold through dedicated signaling or system broadcast.

A communication system according to the embodiment of the present invention may include the user equipment 40 or the base station 50.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, a detailed working process of the foregoing system, apparatus, and unit may refer to the corresponding process in the foregoing method embodiments, and the details will not be described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program codes, such as a USB flash disk, a removable hard disk, a read-only memory (ROM, Read-Only Memory), a random access memory (RAM, Random Access Memory), a magnetic disk, or an optical disk.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

Claims

1. A cell change method, performed by a user equipment, comprising:

receiving a cell list sent by a base station, wherein the cell list comprises a cell identifier of one or more cells;
determining that a target cell of cell change is a micro cell, wherein the cell change comprises cell reselection and cell handover;
determining a mobility state or a moving speed of a user equipment; and
using a decision parameter to make a cell change decision for the target cell according to the mobility state or the moving speed of the user equipment, wherein the decision parameter is scaled based on the mobility state or the moving speed;
the determining that a target cell of cell change is a micro cell comprises:

if all cells in the cell list are micro cells and a cell identifier of the target cell is comprised in the cell list, determining that the target cell is a micro cell,
wherein the cell list further comprises an offset of a cell-specific offset that corresponds to one or more cells, and
an offset of a signal quality offset that corresponds to one or more cells; and
the making a cell change decision for the target cell according to the mobility state or the moving speed of the user equipment comprises:

if the mobility state of the user equipment is a high-mobility state or the moving speed of the user equipment is greater than or equal to a speed threshold,
when the user equipment is in a connected state, using an offset of a cell-specific offset corresponding to the target cell at the time of making a cell change decision, and, when the user equipment is in an idle state, using an offset of a signal quality offset corresponding to the target cell at the time of making the cell change decision.

**2.** The method according to claim 1, wherein: the making a cell change decision for the target cell according to the mobility state or the moving speed of the user equipment comprises:
if the mobility state of the user equipment is a medium-mobility state or a normal-mobility state or the moving speed of the user equipment is lower than a speed threshold, ignoring the cell list at the time of making a cell change decision.

**3.** The method according to claim 1, wherein: the making a cell change decision for the target cell according to the mobility state or the moving speed of the user equipment further comprises:
if the mobility state of the user equipment is a medium-mobility state or a normal-mobility state or the moving speed of the user equipment is lower than a speed threshold, using neither the offset of the cell-specific offset corresponding to the target cell nor the offset of the signal quality offset corresponding to the target cell at the time of making the cell change decision.

**4.** The method according to claim 1, wherein: the using an offset of a cell-specific offset corresponding to the target cell at the time of making a cell change decision comprises:
using the following formula to make the cell change decision:

$$Mn + Ofn + Ocn - Hys > Mp + Ofp + Ocp + Off + OcnOffset,$$

wherein
Mn is a measurement result of the target cell, Ofn is a frequency-specific offset corresponding to the target cell, Ocn is a cell-specific offset of the target cell, Hys is signal hysteresis of an event, Mp is a measurement result of a current serving cell, Ofp is a frequency-specific offset of the current serving cell, Ocp is a cell-specific offset of the current serving cell, Off is an offset parameter of the event, and OcnOffset is an offset of the cell-specific offset of the target cell.

**5.** The method according to claim 1, wherein: the using an offset of a signal quality offset corresponding to the target cell at the time of making a cell change decision comprises:
using the following formulas to make the cell change decision:

$$Rs = Qmeas,s + QHyst,$$

and

$$Rn = Qmeas,n - Qoffset - Q2offset,$$

wherein
Qmeas,s and Qmeas,n are measurements used in cell reselection, QHyst is signal hysteresis of the current serving cell, Qoffset is a signal quality offset of the target cell, and Q2offset is an offset of the signal quality offset of the target cell.

**6.** The method according to claim 1, further comprising:
when it is determined that the target cell is a macro cell, using no decision parameter at the time of making the cell change decision, wherein the decision parameter is scaled based on the mobility state or the moving speed.

**7.** The method according to any one of claims 1 to 6, wherein: the receiving a cell list sent by a base station comprises:

when the user equipment is in a connected state, receiving the cell list that is sent by the base station through dedicated signaling or system broadcast; or
when the user equipment is in an idle state, receiving the cell list that is sent by the base station through system broadcast.

**8.** A user equipment, comprising:

a receiving unit (44), configured to receive a cell list sent by a base station, wherein the cell list comprises a cell identifier of one or more cells;

a first determining unit (41), configured to determine that a target cell of cell change is a micro cell, wherein the cell change comprises cell reselection or cell handover;

a second determining unit (42), configured to determine a mobility state or a moving speed of the user equipment; and

a deciding unit (43), configured to use a decision parameter to make a cell change decision for the target cell according to the mobility state or the moving speed of the user equipment, wherein the decision parameter is scaled based on the mobility state or the moving speed;

the first determining unit (41) is further configured to determine that the target cell is a micro cell in a case where all cells in the cell list are micro cells and the cell identifier of the target cell is comprised in the cell list,

wherein the cell list further comprises an offset of a cell-specific offset that corresponds to one or more cells, and an offset of a signal quality offset that corresponds to one or more cells; and

the making a cell change decision for the target cell according to the mobility state or the moving speed of the user equipment by the deciding unit (43) comprises:

if the mobility state of the user equipment is a high-mobility state or the moving speed of the user equipment is greater than or equal to a speed threshold,

when the user equipment is in a connected state, using an offset of a cell-specific offset corresponding to the target cell at the time of making a cell change decision, and, when the user equipment is in an idle state, using an offset of a signal quality offset corresponding to the target cell at the time of making the cell change decision.

## Patentansprüche

1. Zellenwechselverfahren, welches von einer Benutzerausrüstung vorgenommen wird, umfassend:

Empfangen einer Zellenliste, die von einer Basisstation gesendet wird, wobei die Zellenliste einen Zellenidentifikator einer oder mehrerer Zellen umfasst;

Bestimmen, dass eine Zielzelle des Zellenwechsels eine Mikrozelle ist, wobei der Zellenwechsel eine Zellenneuauswahl und eine Zellenübergabe umfasst;

Bestimmen eines Mobilitätszustands oder einer Bewegungsgeschwindigkeit einer Benutzerausrüstung; und

Verwenden eines Entscheidungsparameters, um eine Zellenwechselentscheidung für die Zielzelle gemäß dem Mobilitätszustand oder der Bewegungsgeschwindigkeit der Benutzerausrüstung zu treffen, wobei der Entscheidungsparameter auf der Basis des Mobilitätszustands oder der Bewegungsgeschwindigkeit skaliert wird;

wobei das Bestimmen, dass eine Zielzelle des Zellenwechsels eine Mikrozelle ist, umfasst:

wenn alle Zellen in der Zellenliste Mikrozellen sind, und ein Zellenidentifikator der Zielzelle in der Zellenliste enthalten ist, Bestimmen, dass die Zielzelle eine Mikrozelle ist;

wobei die Zellenliste ferner eine Versetzung einer zellenspezifischen Versetzung, die einer oder mehreren Zellen entspricht, und eine Versetzung einer Signalqualitätsversetzung, die einer oder mehreren Zellen entspricht, umfasst; und

wobei das Treffen einer Zellenwechselentscheidung für die Zielzelle gemäß dem Mobilitätszustand oder der Bewegungsgeschwindigkeit der Benutzerausrüstung umfasst:

wenn der Mobilitätszustand der Benutzerausrüstung ein Zustand hoher Mobilität ist, oder die Bewegungsgeschwindigkeit der Benutzerausrüstung größer oder gleich einer Geschwindigkeitsschwelle ist, wenn sich die Benutzerausrüstung in einem verbundenen Zustand befindet, Verwenden einer Versetzung einer zellenspezifischen Versetzung, die der Zielzelle zur Zeit des Treffens einer Zellenwechselentscheidung entspricht, und, wenn sich die Benutzerausrüstung in einem Ruhezustand befindet, Verwenden einer Versetzung einer Signalqualitätsversetzung, die der Zielzelle zur Zeit des Treffens der Zellenwechselentscheidung entspricht.

2. Verfahren nach Anspruch 1, wobei: das Treffen einer Zellenwechselentscheidung für die Zielzelle gemäß dem Mobilitätszustand oder der Bewegungsgeschwindigkeit der Benutzerausrüstung umfasst: wenn der Mobilitätszustand der Benutzerausrüstung ein Zustand mittlerer Mobilität oder ein Zustand normaler Mobilität ist, oder die Bewegungsgeschwindigkeit der Benutzerausrüstung kleiner als eine Geschwindigkeitsschwelle ist, Ignorieren der Zellenliste zur Zeit des Treffens einer Zellenwechselentscheidung.

**3.** Verfahren nach Anspruch 1, wobei: das Treffen einer Zellenwechselentscheidung für die Zielzelle gemäß dem Mobilitätszustand oder der Bewegungsgeschwindigkeit der Benutzerausrüstung ferner umfasst:
wenn der Mobilitätszustand der Benutzerausrüstung ein Zustand mittlerer Mobilität oder ein Zustand normaler Mobilität ist, oder die Bewegungsgeschwindigkeit der Benutzerausrüstung kleiner als eine Geschwindigkeitsschwelle ist, Verwenden weder der zellenspezifischen Versetzung, die der Zielzelle entspricht, noch der Versetzung der Signalqualitätsversetzung, die der Zielzelle zur Zeit des Treffens der Zellenwechselentscheidung entspricht.

**4.** Verfahren nach Anspruch 1, wobei: das Verwenden einer zellenspezifischen Versetzung, die der Zielzelle zur Zeit des Treffens einer Zellenwechselentscheidung entspricht, umfasst:
Verwenden der folgenden Formel, um die Zellenwechselentscheidung zu treffen:

$$Mn + Ofn + Ocn - Hys > Mp + Ofp + Ocp + Off + OcnOffset,$$

wobei
Mn ein Messergebnis der Zielzelle ist, Ofn eine frequenzspezifische Versetzung ist, die der Zielzelle entspricht, Ocn eine zellenspezifische Versetzung der Zielzelle ist, Hys eine Signalhysterese eines Ereignisses ist, Mp ein Messergebnis einer aktuellen bedienenden Zelle ist, Ofp eine frequenzspezifische Versetzung der aktuellen bedienenden Zelle ist, Ocp eine zellenspezifische Versetzung der aktuellen bedienenden Zelle ist, Off ein Versetzungsparameter des Ereignisses ist, und OcnOffset eine Versetzung der zellenspezifischen Versetzung der Zielzelle ist.

**5.** Verfahren nach Anspruch 1, wobei: das Verwenden einer Versetzung der Signalqualitätsversetzung, die der Zielzelle zur Zeit des Treffens einer Zellenwechselentscheidung entspricht, umfasst:
Verwenden der folgenden Formeln, um die Zellenwechselentscheidung zu treffen:

$$Rs = Qmeas,s + QHyst,$$

und

$$Rn = Qmeas,n - Qoffset - Q2offset,$$

wobei
Qmeas,s und Qmeas,n Messungen sind, die bei der Zellenneuauswahl verwendet werden, QHyst eine Signalhysterese der aktuellen bedienenden Zelle ist, Qoffset eine Signalqualitätsversetzung der Zielzelle ist, und Q2offset eine Versetzung der Signalqualitätsversetzung der Zielzelle ist.

**6.** Verfahren nach Anspruch 1, ferner umfassend:
wenn bestimmt wird, dass die Zielzelle eine Makrozelle ist, Verwenden keines Entscheidungsparameters zur Zeit des Treffens der Zellenwechselentscheidung, wobei der Entscheidungsparameter auf der Basis des Mobilitätszustands oder der Bewegungsgeschwindigkeit skaliert wird.

**7.** Verfahren nach einem der Ansprüche 1 bis 6, wobei: das Empfangen einer Zellenliste, die von einer Basisstation gesendet wird, umfasst:

wenn sich die Benutzerausrüstung in einem verbundenen Zustand befindet, Empfangen der Zellenliste, die von der Basisstation gesendet wird, durch dedizierte Signalisierung oder Systemübertragung; oder
wenn sich die Benutzerausrüstung in einem Ruhezustand befindet, Empfangen der Zellenliste, die von der Basisstation gesendet wird, durch Systemübertragung.

**8.** Benutzerausrüstung, umfassend:

eine Empfangseinheit (44), die ausgelegt ist, eine Zellenliste zu empfangen, die von einer Basisstation gesendet wird, wobei die Zellenliste einen Zellenidentifikator einer oder mehrerer Zellen umfasst;
eine erste Bestimmungseinheit (41), die ausgelegt ist zu bestimmen, dass eine Zielzelle eines Zellenwechsels eine Mikrozelle ist, wobei der Zellenwechsel eine Zellenneuauswahl und eine Zellenübergabe umfasst;

eine zweite Bestimmungseinheit (42), die ausgelegt ist, einen Mobilitätszustand oder eine Bewegungsgeschwindigkeit der Benutzerausrüstung zu bestimmen; und

eine Entscheidungseinheit (43), die ausgelegt ist, einen Entscheidungsparameter zu verwenden, um eine Zellenwechselentscheidung für die Zielzelle gemäß dem Mobilitätszustand oder der Bewegungsgeschwindigkeit der Benutzerausrüstung zu treffen, wobei der Entscheidungsparameter auf der Basis des Mobilitätszustands oder der Bewegungsgeschwindigkeit skaliert wird;

wobei die erste Bestimmungseinheit (41) ferner ausgelegt ist zu bestimmen, dass die Zielzelle eine Mikrozelle ist, in einem Fall, wo alle Zellen in der Zellenliste Mikrozellen sind, und der Zellenidentifikator der Zielzelle in der Zellenliste enthalten ist;

wobei die Zellenliste ferner eine Versetzung einer zellenspezifischen Versetzung, die einer oder mehreren Zellen entspricht, und eine Versetzung einer Signalqualitätsversetzung, die einer oder mehreren Zellen entspricht, umfasst; und

wobei das Treffen einer Zellenwechselentscheidung für die Zielzelle gemäß dem Mobilitätszustand oder der Bewegungsgeschwindigkeit der Benutzerausrüstung durch die Entscheidungseinheit (43) umfasst:

wenn der Mobilitätszustand der Benutzerausrüstung ein Zustand hoher Mobilität ist, oder die Bewegungsgeschwindigkeit der Benutzerausrüstung größer oder gleich einer Geschwindigkeitsschwelle ist, wenn sich die Benutzerausrüstung in einem verbundenen Zustand befindet, Verwenden einer Versetzung einer zellenspezifischen Versetzung, die der Zielzelle zur Zeit des Treffens einer Zellenwechselentscheidung entspricht, und, wenn sich die Benutzerausrüstung in einem Ruhezustand befindet, Verwenden einer Versetzung einer Signalqualitätsversetzung, die der Zielzelle zur Zeit des Treffens der Zellenwechselentscheidung entspricht.

## Revendications

1. Procédé de changement de cellule, réalisé par un équipement utilisateur, consistant :

à recevoir une liste de cellules envoyée par une station de base, dans lequel la liste de cellules comprend un identifiant de cellule d'une ou de plusieurs cellules ;
à déterminer qu'une cellule cible d'un changement de cellule est une microcellule, dans lequel le changement de cellule comprend une resélection de cellule et un transfert de cellule ;
à déterminer un état de mobilité ou une vitesse de déplacement d'un équipement d'utilisateur ; et
à utiliser un paramètre de décision pour prendre une décision de changement de cellule pour la cellule cible en fonction de l'état de mobilité ou de la vitesse de déplacement de l'équipement utilisateur, dans lequel le paramètre de décision est pondéré en se basant sur l'état de mobilité ou la vitesse de déplacement ;
la détermination qu'une cellule cible d'un changement de cellule est une microcellule consiste :

si toutes les cellules dans la liste de cellules sont des microcellules et si un identifiant de cellule de la cellule cible est inclus dans la liste de cellules, à déterminer que la cellule cible est une macrocellule, dans lequel la liste de cellules comprend en outre un décalage d'un décalage spécifique à une cellule qui correspond à une ou plusieurs cellules, et un décalage d'un décalage de qualité de signal qui correspond à une ou plusieurs cellules ; et
la prise d'une décision de changement de cellule pour la cellule cible en fonction de l'état de mobilité ou de la vitesse de déplacement de l'équipement utilisateur consiste :

si l'état de mobilité de l'équipement utilisateur est un état de mobilité élevée ou si la vitesse de déplacement de l'équipement utilisateur est supérieure ou égale à un seuil de vitesse, lorsque l'équipement utilisateur est dans un état connecté, à utiliser un décalage d'un décalage spécifique à une cellule correspondant à la cellule cible au moment de la prise d'une décision de changement de cellule et, lorsque l'équipement utilisateur est dans un état de repos, à utiliser un décalage d'un décalage de qualité de signal correspondant à la cellule cible au moment de la prise de la décision de changement de cellule.

2. Procédé selon la revendication 1, dans lequel : la prise d'une décision de changement de cellule pour la cellule cible en fonction de l'état de mobilité ou de la vitesse de déplacement de l'équipement utilisateur consiste :
si l'état de mobilité de l'équipement utilisateur est un état de mobilité intermédiaire ou un état de mobilité normale ou si la vitesse de déplacement de l'équipement utilisateur est inférieure à un seuil de vitesse, à ignorer la liste de cellules au moment de la prise d'une décision de changement de cellule.

3. Procédé selon la revendication 1, dans lequel : la prise d'une décision de changement de cellule pour la cellule cible en fonction de l'état de mobilité ou de la vitesse de déplacement de l'équipement utilisateur consiste en outre : si l'état de mobilité de l'équipement utilisateur est un état de mobilité intermédiaire ou un état de mobilité normale ou si la vitesse de déplacement de l'équipement utilisateur est inférieure à un seuil de vitesse, à n'utiliser ni le décalage du décalage spécifique à une cellule correspondant à la cellule cible, ni le décalage du décalage de qualité de signal correspondant à la cellule cible au moment de la prise de la décision de changement de cellule.

4. Procédé selon la revendication 1, dans lequel : l'utilisation d'un décalage d'un décalage spécifique à une cellule correspondant à la cellule cible au moment de la prise d'une décision de changement de cellule consiste :
à utiliser la formule suivante pour prendre la décision de changement de cellule :

$$Mn + Ofn + Ocn - Hys > Mp + Ofp + Ocp + Off + OcnOffset,$$

dans lequel
Mn est un résultat de mesure de la cellule cible, Ofn est un décalage spécifique à une fréquence correspondant à la cellule cible, Ocn est un décalage spécifique à une cellule de la cellule cible, Hys est une hystérésis de signal d'un événement, Mp est un résultat de mesure d'une cellule de desserte actuelle, Ofp est un décalage spécifique à une fréquence de la cellule de desserte actuelle, Ocp est un décalage spécifique à une cellule de la cellule de desserte actuelle, Off est un paramètre de décalage de l'événement et OcnOffset est un décalage du décalage spécifique à une cellule de la cellule cible.

5. Procédé selon la revendication 1, dans lequel : l'utilisation d'un décalage d'un décalage spécifique à une cellule correspondant à la cellule cible au moment de la prise d'une décision de changement de cellule consiste :
à utiliser les formules suivantes pour prendre la décision de changement de cellule :

$$Rs = Qmeas,s + QHyst,$$

et

$$Rn = Qmeas,n - Qoffset - Q2offset,$$

dans lequel
Qmeas,s et Qmeas,n sont des mesures utilisées dans une resélection de cellule, QHyst est une hystérésis de signal de la cellule de desserte actuelle, Qoffset est un décalage de qualité de signal de la cellule cible et Q2offset est un décalage du décalage de qualité de signal de la cellule cible.

6. Procédé selon la revendication 1, consistant en outre :
lorsqu'il est déterminé que la cellule cible est une macrocellule, à n'utiliser aucun paramètre au moment de la prise de la décision de changement de cellule, dans lequel le paramètre de décision est pondéré en se basant sur l'état de mobilité ou la vitesse de déplacement.

7. Procédé selon l'une quelconque des revendications 1 à 6, dans lequel : la réception d'une liste de cellules envoyée par une station de base consiste :

lorsque l'équipement utilisateur est dans un état connecté, à recevoir la liste de cellules qui est envoyée par la station de base au moyen d'une signalisation dédiée ou d'une diffusion de système ; ou
lorsque l'équipement utilisateur est dans un état de repos, à recevoir la liste de cellules qui est envoyée par la station de base au moyen d'une diffusion de système.

8. Équipement utilisateur comprenant :

une unité de réception (44), configurée pour recevoir une liste de cellules envoyée par une station de base, dans lequel la liste de cellules comprend un identifiant de cellule d'une ou de plusieurs cellules ;

une première unité de détermination (41), configurée pour déterminer qu'une cellule cible d'un changement de cellule est une microcellule, dans lequel le changement de cellule comprend une resélection de cellule et un transfert de cellule ;

une seconde unité de détermination (42), configurée pour déterminer un état de mobilité ou une vitesse de déplacement de l'équipement d'utilisateur ; et

une unité de décision (43), configurée pour utiliser un paramètre de décision pour prendre une décision de changement de cellule pour la cellule cible en fonction de l'état de mobilité ou de la vitesse de déplacement de l'équipement utilisateur, dans lequel le paramètre de décision est pondéré en se basant sur l'état de mobilité ou la vitesse de déplacement ;

la première unité de détermination (41) est en outre configurée pour déterminer que la cellule cible est une microcellule dans le cas où toutes les cellules dans la liste de cellules sont des microcellules et que l'identifiant de cellule de la cellule cible est inclus dans la liste de cellules,

dans lequel la liste de cellules comprend en outre un décalage d'un décalage spécifique à une cellule qui correspond à une ou plusieurs cellules, et un décalage d'un décalage de qualité de signal qui correspond à une ou plusieurs cellules ; et

la prise d'une décision de changement de cellule pour la cellule cible en fonction de l'état de mobilité ou de la vitesse de déplacement de l'équipement utilisateur par l'unité de décision (43) consiste :

si l'état de mobilité de l'équipement utilisateur est un état de mobilité élevée ou si la vitesse de déplacement de l'équipement utilisateur est supérieure ou égale à un seuil de vitesse,

lorsque l'équipement utilisateur est dans un état connecté, à utiliser un décalage d'un décalage spécifique à une cellule correspondant à la cellule cible au moment de la prise d'une décision de changement de cellule et, lorsque l'équipement utilisateur est dans un état de repos, à utiliser un décalage d'un décalage de qualité de signal correspondant à la cellule cible au moment de la prise de la décision de changement de cellule.

Determine that a target cell of cell change is a micro cell, where the cell change includes cell reselection or cell handover ⟋ 101

↓

Determine a mobility state or a moving speed of a user equipment ⟋ 102

↓

Make a cell change decision for the target cell according to the mobility state or the moving speed of the user equipment ⟋ 103

FIG. 1

Generate a cell list, where the cell list includes a cell identifier of one or more cells ⟋ 201

↓

Send the cell list to a user equipment, so that the user equipment makes a cell change decision for a target cell according to the cell list and a mobility state or a moving speed of the user equipment ⟋ 202

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011013967 A2
- US 6285884 B1
- US 2010113036 A1
- US 2008176563 A1